**Europäisches Patentamt**

**European Patent Office**

**Office européen des brevets**

(11) Veröffentlichungsnummer: **0 116 170**

**A2**

(12) **EUROPÄISCHE PATENTANMELDUNG**

(21) Anmeldenummer: **83113101.6**

(22) Anmeldetag: **24.12.83**

(51) Int. Cl.³: **G 01 G 3/12**
**G 01 G 3/14**

(30) Priorität: **17.01.83 US 458464**
**04.11.83 US 549234**

(43) Veröffentlichungstag der Anmeldung:
**22.08.84 Patentblatt 84/34**

(84) Benannte Vertragsstaaten:
**BE CH DE FR GB LI NL SE**

(71) Anmelder: **HOTTINGER BALDWIN MESSTECHNIK GMBH**
**Im Tiefen See 45 Postfach 42 35**
**D-6100 Darmstadt(DE)**

(72) Erfinder: **Lockery, Harry E.**
**114 Moore Road**
**Subury Massachusetts 02178(US)**

(72) Erfinder: **Freymiller, Edward**
**170 Essex Street**
**Lynnfield Massachusetts 01940(US)**

(74) Vertreter: **Brand, Fritz, Dipl.-Ing.**
**Hottinger Baldwin Messtechnik GmbH Patentabteilung**
**Im Tiefen See 45 Postfach 42 35**
**D-6100 Darmstadt(DE)**

(54) **Waage mit stabförmigen Messwandlerbalken.**

(57) Eine Waage, insbesondere ein plattformartige Waage, ist mit zwei Meßwandlerstäben ausgerüstet. Jeder Meßwandlerstab ist mit Hilfe eines Abstandshalters von einem Unterboden auf Abstand gehalten, so daß beide Wandlerstäbe auskragen, um insgesamt vier Meßwandlerbalken zu bilden, einen an jedem Stabende. Die Last wird in jeden Meßwandlerbalken, der vorzugsweise in der Nähe einer Ecke der Belastungsplatte angeordnet ist, über einen Belastungsarm und eine Kugel und Kugelpfannenbelastungseinrichtung eingeleitet. Vorzugsweise sind die Kugel und die Kugelpfannenbelastungseinrichtung über dem Ende des betreffenden Meßwandlerbalkens und unterhalb der Belastungsplatte angeordnet. Dadurch, daß die Stützfüße vertikal mit dem Lasteinleitungspunkt ausgerichtet sind, wird die Anordnung im wesentlichen frei von unbeabsichtigten Belastungen, einschließlich Biegebelastungen, wodurch eine sehr leichte Bauweise möglich wird. Dadurch, daß der Überlastanschlag ebenfalls vertikal mit dem Lasteinleitungspunkt ausgerichtet ist, wird der Meßwandlerbalken ebenfalls frei von jedem Moment, wenn der Überlastanschlag wirksam ist.

*FIG. 2*

EP 0 116 170 A2

Waage mit stabförmigen Meßwandlerbalken

Die vorliegende Erfindung bezieht sich auf Waagen, insbesonders auf plattformartige Waagen mit stabförmigen Meßwandlerbalken.

Plattformartige Waagen oder Plattenwaagen sind aus dem US-Patent 4,261,429 bekannt. Hier bilden die Meßwandler integrale Komponenten der Plattform. Für diesen Zweck sind Schlitze in die Plattform gefräst oder geschnitten, so daß zwei parallele Einschnitte oder Schlitze eine Meßwandlerbalkenstruktur bestimmen. Die Empfindlichkeit dieser Meßwandler wird dadurch bestimmt, daß Löcher in die Plattform am Ende jedes Schlitzes und zwischen den beiden Enden jedes Schlitzes gebohrt werden. Dehnungsmeßfühler sind an den Meßwandlern befestigt. Das freie Ende jedes Meßwandlers wirkt mit einer Belastungsvorrichtung zusammen, um die Last, die zu messen ist, aufzubringen. Obwohl eine derartige Waage hervorragende Eigenschaften hat, lassen sich doch noch Verbesserungen erzielen.

Das US-Patent 1,807,451 offenbart eine Art Wälzlager, das zusammen mit vibrierenden Rahmen in Sieb- oder Sortiereinrichtungen für körnige Materialien benutzt wird. Dieses herkömmliche Lager enthält zwei Kalotten, die jeweils mit einem Gummieinsatz ausgestattet sind, um einen Wälzkörper zwischen den Gummieinsätzen zu halten. Die zwei Kalotten werden von einem flexiblen Schlauch umfaßt, um Schmutz vom Lager fernzuhalten. Die nichtmetallischen zusammendrückbaren Einsätze sind vorgesehen, um Stöße, denen das Wälzlager ausgesetzt sein könnte, zu dämpfen. Da die Einsätze zusammendrückbar sind, ist diese Art Lager nicht dazu geeignet, vertikale Lastkomponenten in einer Waage genau zu übertragen.

Das US-Patent 3,512,595 offenbart eine Waage, in der ein balkenartiger Meßwandler in jeder Ecke der Waage angeordnet ist. Diese balkenartigen Meßwandler erstrecken sich horizontal, wobei ein Ende des Meßwandlers an einem festen Stützpunkt und das andere Ende des Meßwandlers an der Platte befestigt ist, auf die die Last aufgebracht wird. Solche Waagen erfordern viele Herstellungsschritte.

Es ist Aufgabe der Erfindung, die folgenden Zwecke einzeln oder in Kombination zu erreichen: es sollen die nötigen Herstellungsschritte und die Anzahl der Teile für eine Plattenwaage, die für verschiedene Wiegezwecke verwendbar sein soll und relativ kostengünstig ist, wesentlich reduziert werden; die balkenartigen Meß- oder Wandlerelemente sollen aus normiertem Stabmaterial herstellbar sein und zwar im wesentlichen ohne irgendwelche maschinelle Bearbeitung, außer daß das Stabmaterial in Stücke brauchbarer Länge geschnitten wird;
der Effekt von Lastkomponenten, die nicht vertikal wirksam sind, auf die Anzeige soll auf ein Minimum reduziert werden; der Materialaufwand, im Vergleich zu Waagen mit vollen Platten und sogar im Vergleich zu Waagen mit Rahmenplatten, soll erheblich verringert werden, um Kosten zu sparen;
eine Platten- oder Plattformwaage soll so konstruiert werden, daß die Lastkomponenten und die Reaktionskräfte der Lastkomponenten miteinander in der Vertikalen koinzidieren, um unerwünschte Belastungen, einschließlich Biegebelastungen, die ohne diese Koinzidenz auftreten können, möglichst auszuschalten; solche Belastungen sollen vermieden werden, um die mechanischen Komponenten der Waage diesen Belastungen nicht auszusetzen; es sollen Komponenten derart miteinander kombiniert werden, daß damit gleichzeitig einstellbare Füße und ein Überlastungsschutz für die Waage erzielt wird;

es soll vermieden werden, daß der Meßwandlerbalken unerwünschten Ablenkungen ausgesetzt ist, so daß Belastungen des Meßwandlerbalkens, die nicht von der zu messenden Last herrühren, vermieden werden;

es sollen Löcher in normierte Wandlerbalkenabschnitte gestanzt werden, um das Bohren oder Fräsen solcher Löcher zu vermeiden; es sollen Waagen für verschiedene Belastungbereiche dadurch erstellt werden, daß der Abstand zwischen zwei Dehnungsmeßstreifen auf einen Meßwandlerbalken gegebener Größe an diese verschiedenen Belastungsbereiche angepaßt wird; die Durchbiegung des Meßwandlerbalkens soll minimal gehalten werden, um damit auch die Auslenkung der Lastübertragungsmittel optimal zu reduzieren; und die Überlastungsschutzmittel sollen vertikal mit dem Lasteinleitungspunkt ausgerichtet werden, um damit jede Meßbalkendurchbiegung zu vermeiden, wenn der Überlastungsschutz wirksam ist.

Diese Aufgabe wird durch die in den Ansprüchen beschriebene Erfindung gelöst.

Hierdurch wird eine flach bauende Waage mit guter Genauigkeit und einfachen strukturellen Komponenten geschaffen.

Durch Herstellung der balkenartigen Wandler oder Meßelemente aus normiertem Stabmaterial, im wesentlichen ohne irgendwelche maschinelle Bearbeitung, werden die Herstellungskosten bedeutend reduziert gegenüber herkömmlichen Waagen von vergleichbarer Qualität. Das Schneiden der Stäbe in Stücke brauchbarer Länge und das Bohren oder sogar Stanzen einer kleinen Anzahl von Löchern in Verbindung mit den Ladearmen und Abstandselementen ergeben eine überraschende Vereinfachung gegenüber vergleichbaren herkömmlichen Waagen.

Eine weitere Verbesserung der erfindungsgemäßen Waage ist durch die Verbindung von zwei Meßeinheiten mit einem oder mit zwei Querversteifungsgliedern gekennzeichnet. Jede Meßeinheit enthält einen Meßwandlerstab und eine Halterung mit einem Abstandshalter zwischen dem Stab und der Halterung, so daß jedes Ende des Meßwandlerstabes auskragt, um einen Meßwandlerbalken an jedem Ende zu bilden. Eine Platte deckt die beiden querverbundenen Einheiten ab und Lastübertragungsmittel sind zwischen der Platte und jedem Meßwandlerbalken angeordnet. Jeder Fuß ist an der Halterung in vertikaler Ausrichtung mit dem betreffenden Lastübertragungsmittel befestigt. Speziell, die vertikale Ausrichtung bezieht sich auf den Lasteinleitungspunkt, wobei sich eine wesentliche Koinzidenz zwischen den vertikalen Lasteinleitungskräften und den Reaktionskräften ergibt. Dieses Merkmal hat den wesentlichen Vorteil, daß die Querversteifungsglieder von Momenten im wesentlichen frei sind. Entsprechend können die Querversteifungsglieder sehr leicht ausgeführt sein.

Vorzugsweise sind die Füße einstellbar und ein Überlastungsstop ist direkt in jedem Fuß angeordnet und zwar auch in axialer Ausrichtung mit dem Lasteinleitungspunkt. Dieses Merkmal hat den Vorteil, daß der betreffende Meßwandlerbalken gar nicht durchgebogen wird, wenn der Überlastungsstop wirksam ist, womit ein maximaler Schutz für die Meßwandlerbalken erzielt wird.

Die Erfindung wird nachfolgend beispielsweise anhand der Zeichnungen beschrieben. Es zeigen:

Fig. 1    eine Draufsicht auf eine Waage gemäß der Erfindung, wobei die Belastungsplattform oder Platte nur in der oberen linken Ecke angedeutet ist;

0116170

Fig. 2      eine Seitenansicht der Waage in der Richtung des
            Pfeils A in Fig. 1, wobei die Lastübertragungsmittel teils im Schnitt dargestellt sind;

Fig. 3 . etwas vergrößert, eine andere Ausgestaltung einer
            Ecke der Waage;

Fig. 4      eine Ansicht ähnlich Fig. 3, mit einem anderen
            Lageort des Stützfußes an der Ecke der Waage;

Fig. 5a     eine Ansicht, ähnlich Fig. 1, einer weiteren Ausu. 5b       führungsform, wobei Fig. 5a die linke Seite und
            Fig. 5b die rechte Seite der Waage dargestellt;

Fig. 6a     eine Draufsicht auf einen Rahmen mit zwei Wandlereinheiten und einem Querversteifungsglied;

Fig. 6b     eine Seitenansicht der Fig. 6a;

Fig. 7a     eine Draufsicht auf einen Rahmen mit zwei Wandlereinheiten und zwei Querversteifungsgliedern;

Fig. 7b     eine Seitenansicht der Fig. 7a;

Fig. 8      eine Draufsicht einer Fußhülse, die an jeder Ecke
            einer erfindungsgemäßen Waage angeordnet ist;

Fig. 9      eine Draufsicht auf einen erfindungsgemäßen Meß-
            wandlerstab mit einem Meßwandlerbalken an jedem
            Stabende; und

Fig. 1o     eine weitere Seitenansicht einer Ausführungsform
            ähnlich Fig. 7b. ·

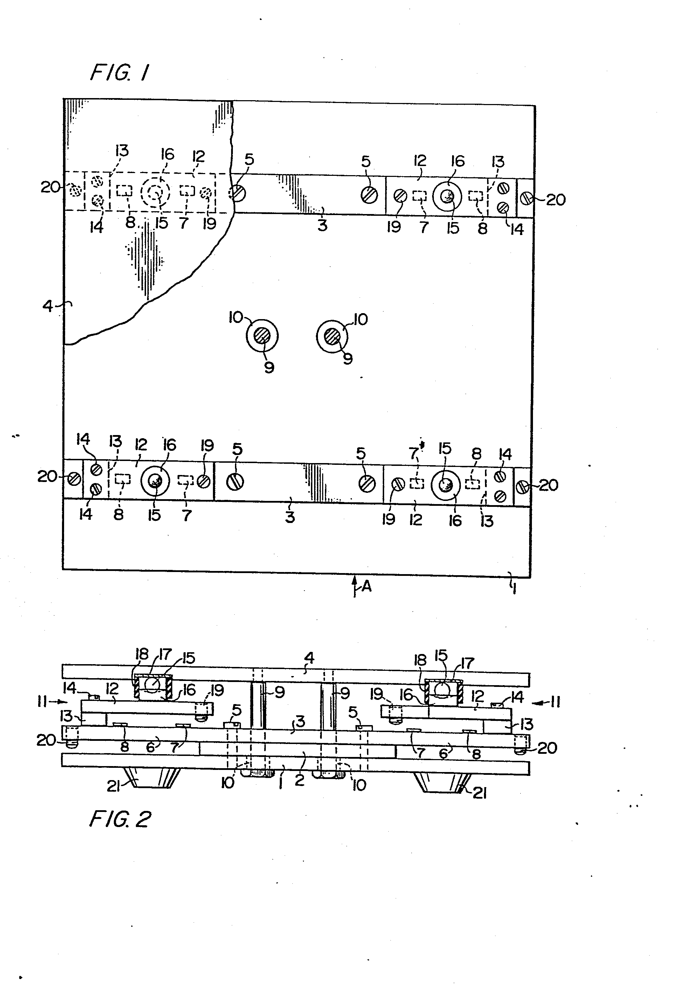

Die Figuren 1 und 2 zeigen eine erfindungsgemäße Waage mit einem Boden 1, mindestens zwei Abstandshaltern oder Distanzstücken 2 und zwei Meßwandlerstäben 3, sowie einer Belastungsplatte 4. Schrauben 5 befestigen die Meßwandlerstäbe
3 an dem Boden 1, so daß mindestens ein Distanzstück 2
zwischen dem jeweiligen Meßwandlerstab 3 und dem Boden 1 eingefügt ist. Da die Distanzstücke 2 kürzer als die Meßwandlerstäbe 3 sind, kragen die freien Enden der Meßwandlerstäbe
an beiden Enden des jeweiligen Distanzstückes aus, um
balkenartige Meßwandler 6 zu bilden. Jeder balkenartige
Meßwandler 6 trägt eine Anzahl, z.B. zwei, Dehnungsmeßfühler 7 und 8, die z.B. mit Klebstoff an dem betreffenden
Meßwandlerbalken befestigt sind. Die Dehnungsmeßfühler 7
sind Zugbelastungskomponenten und die Dehnungsmeßfühler 8
sind Druckbelastungskomponenten ausgesetzt. Die Dehnungsmeßfühler sind untereinander zu Brückenschaltungen verbunden, wie es bekannt ist.

Ansatzschrauben 9 sind in die Belastungsplatte 4 eingeschraubt und gehen mit Spiel durch Löcher 1o im Boden 1.
Eine Mehrzahl solcher Ansatzschrauben 9 kann benutzt werden
und deren Lage in der Fläche des Bodens 1 und der Platte 4
kann beliebig gewählt werden. Die in den Figuren 1 und 2
gezeigte Lage ist nur ein Beispiel. Die Ansatzschrauben 9
begrenzen alle horizontalen Bewegungen der Platte 4 relativ
zum Boden 1, die über das Spiel der Löcher 1o hinausgehen
würden. Damit ist die Wirkung von horizontal und schräg
wirksamen Lastkomponenten auf das Meßergebnis reduziert.

Lastübertragungsmittel 11 sind zwischen der Platte 4 und
dem jeweiligen Meßwandlerbalken 6 angeordnet. Jedes Lastübertragungsmittel enthält einen Arm 12 und einen Distanzblock 13 sowie Verbindungsschrauben 14, die ein Ende des
Lastübertragungsarms 12 an dem freien Ende des jeweiligen
Meßwandlerbalkens befestigen. Jedes Lastübertragungsmittel
enthält weiterhin eine gehärtete Stahlkugel 15, die in
einer gehärteten Stahlkalotte 16 lagert und sich gegen einen gehärteten Stahleinsatz 17 in der Platte 4 abstützt. Eine flexible Gummihülse 18 ist an der Platte 4 befestigt und umfaßt die gehärtete Stahlkalotte 16, um horizontale Bewegungen der Platte 4 zu behindern, und um irgendwelche Schwingungen, die von solchen Plattenbewegungen ausgehen können, zu dämpfen. Damit wird der Effekt von nichtvertikalen Lasten ebenfalls reduziert.

Ein erster einstellbarer Überlastanschlag, z.B. eine Madenschraube 19 , ist betriebsfähig zwischen dem freien Ende jedes Lastübertragungsarms 12 und dem jeweiligen Meßwandlerstab 3 vorgesehen.

Ein zweiter Überlastbegrenzeranschlag, z.B. eine Maden- oder Einstellschraube 2o, ist an dem freien Ende jedes Wandlerbalkens 6 vorgesehen, um mit dem Boden 1 zusammenzuwirken.

Figur 2 zeigt Füße 21, die beispielsweise vertikal in einer geraden Linie unter der Zentralachse der Lastübertragungskugel 15 angeordnet sind.

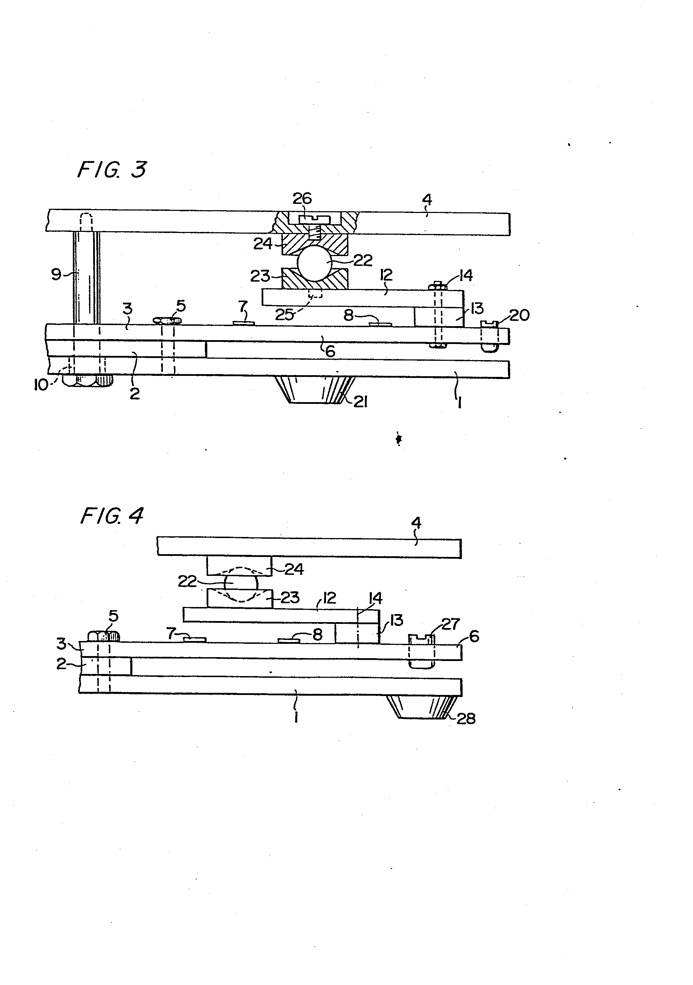

Figur 3 zeigt eine Ausführungsform, in der als Lastübertragungsmittel eine gehärtete Stahlkugel 22 zwischen zwei gehärteten Stahlkugelpfannen 23 und 24 gehalten ist. Die gehärtete Stahlkugelpfanne 23 ist beispielsweise mit einer Schraube 25 an dem freien Ende des Lastübertragungsarms 12 befestigt. Die gehärtete Stahlkugelpfanne 24 ist an der Platte 4 befestigt, z.B. mit einer Schraube 26. In Fig. 3 ist keine Gummihülse vorgesehen, obwohl eine solche auch hier benutzt werden kann, um Schwingungen zu dämpfen. Die übrigen Komponenten sind genau dieselben, wie in den Figuren 1 und 2, und deshalb wurden dieselben Bezugszeichen benutzt.

Die Kugel- und Kugelpfannenanordnung in Figur 4 entspricht der in Figur 3 dargestellten. Der zweite Überlastbegrenzer-

anschlag am freien Ende des Meßwandlerbalkens 6 enthält jedoch eine Einstellschraube 27, die axial und vertikal in einer Linie mit dem Fuß 28 liegt, so daß irgendwelche Überlastungen direkt in den jeweiligen Fuß eingeleitet werden. Damit werden alle Biegeelemente in allen Waagenkomponenten reduziert.

Die Platte 4 kann ein zwischengliedartiges "Zwischendeck" sein, das von einer äußeren Plattform mit einem üblichen unteren Rand an allen Seiten der Waage abgedeckt ist. In allen diesen Ausführungsformen wird die Last von dem Zwischendeck auf die vier Ecken übertragen, wobei die Meßwandlerstäbe 3 vorzugsweise parallel zueinander und parallel zu zwei parallelen Kanten der Waage, die beispielsweise als Quadrat oder Rechteck ausgebildet sein kann, angeordnet sind. In dem beschriebenen Ausführungsbeispiel werden insgesamt acht Dehnungsmeßfühler 7 und 8 benutzt, die untereinander zu zwei herkömmlichen Meßbrückenschaltungen zusammengefaßt sind. Vier Dehnungsmeßfühler an einem Meßwandlerstab bilden eine Brückenschaltung und die vier Dehnungsmeßfühler an dem anderen Meßwandlerstab, ähnlich zusammengeschaltet, bilden eine weitere Brückenschaltung. Die zwei Brückenschaltungen sind dann parallel geschaltet. Es ist für den Fachmann klar, daß mehr oder weniger Dehnungsmeßstreifen benutzt werden können, und daß keine Einschränkung diesbezüglich beabsichtigt ist.

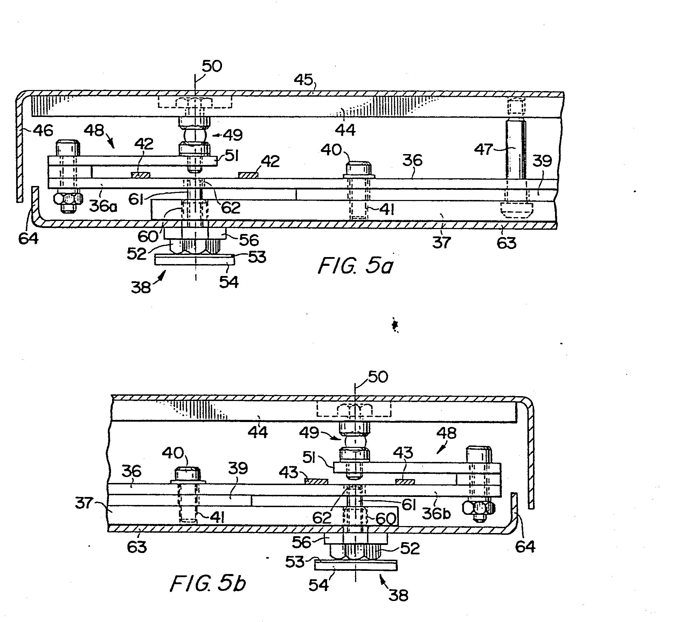

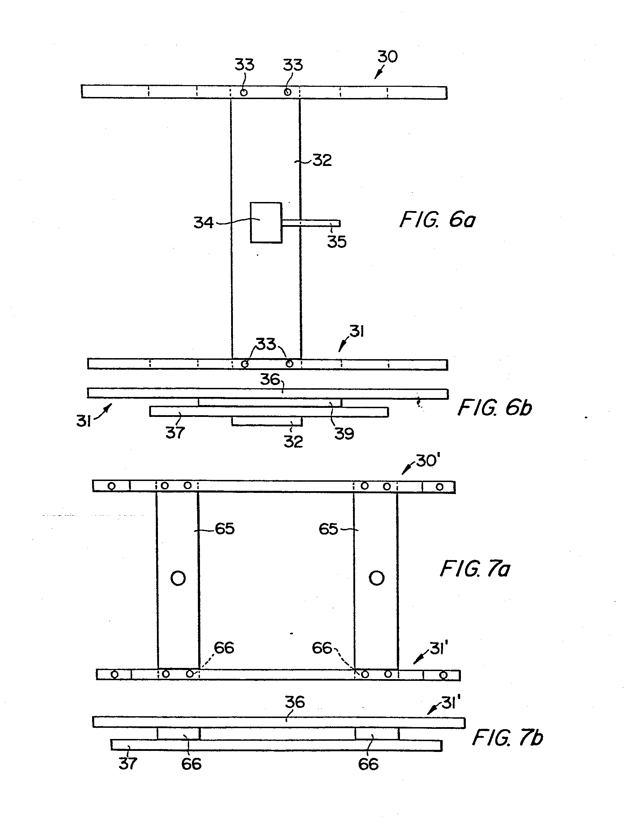

Fig. 6a zeigt zwei Meßwandlereinheiten 30 und 31, die mit Hilfe eines Quergliedes 32 und Schrauben 33 steif miteinander verbunden sind. Das Querglied 32 kann als Träger für gedruckte Schaltungskomponenten 34 und für elektrische Schaltungen 35, die beide herkömmlicher Art sind, benutzt werden. Figur 6b zeigt eine Seitenansicht der Meßwandlereinheit 31. Die Seitenansicht zeigt, daß jede Meßwandlereinheit 31, 30 einen länglichen Meßwandlerstab 36 und ein Fußmontierglied 37 für die Halterung der zwei Füße 38 aufweist. Die Füße 38 sind in den Figuren 5a und 5b gezeigt.

Ein Abstandhalter 39 ist zwischen dem Meßwandlerstab 36 und dem Fußmontierglied 37 angeordnet. Die soeben genannten Elemente jeder Meßwandlereinheit 3o, 31, werden durch Schrauben 4o zusammengehalten, die in Gewindelöcher 41 des Fußmontiergliedes 37 eingeschraubt sind. Damit hat jeder Meßwandlerstab 36 zwei auskragende Enden, welche Meßwandlerbalken 36a und 36b bilden. Dehnungsmeßstreifenelemente oder Fühler 42 sind herkömmlich mit den Meßwandlerbalken 36a verbunden. In ähnlicher Weise sind Dehnungsmeßstreifenelemente oder Fühler 43 mit den Meßwandlerbalken 36b verbunden. Eine Platte 44 ist oberhalb der Meßwandlereinheiten angeordnet. Die Platte 44 ist mit einer Abdeckung 45 mit einer Kante bzw. Spritzschutz 46 versehen. Eine oder mehrere Ansatzschrauben 47 funktionieren in derselben Weise, wie die oben genannten Ansatzschrauben 9.

Eine Lastübertragungsvorrichtung 48 ist wirksam zwischen der Platte 44 und jedem Meßwandlerbalken 36a, 36b angeordnet. Jede Lastübertragungsvorrichtung 48 weist eine Kugel und Kugelpfanne 49 auf, die vertikal mit dem Lasteinleitungspunkt ausgerichtet sind, wie die vertikalen Linien 5o andeuten. Jede Lastübertragungsvorrichtung 48 enthält ferner einen Lastübertragungsarm 51, der mit dem freien Ende des betreffenden Meßwandlerbalkens 36a, 36b verbunden ist, wie oben beschrieben wurde.

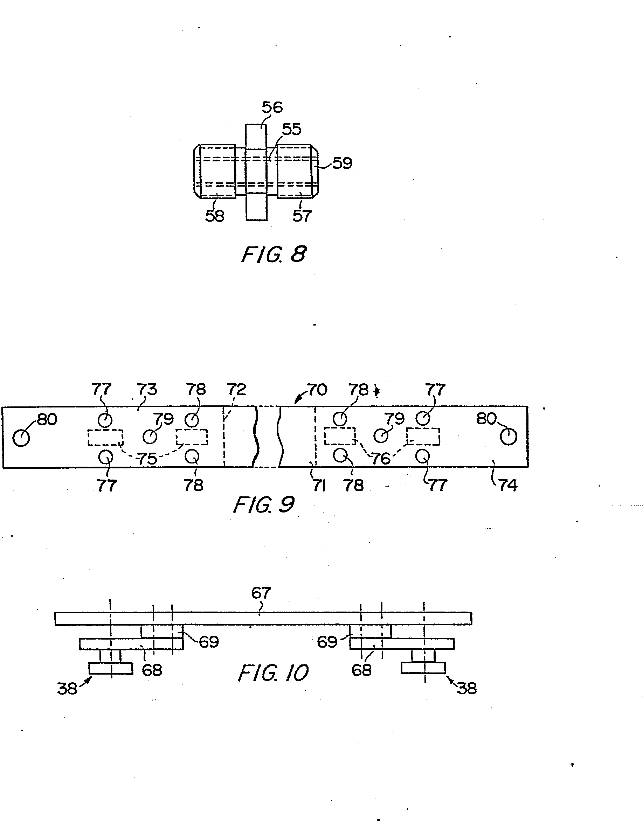

Jede Baugruppe 38 mit den Füßen enthält eine Mutter 52 mit einem Flansch 53, der mit einem elastischen Kissen 54 ver- sehen ist, Jede Flanschmutter 52 ist vertikal auf und ab einstellbar und zwar auf einer Hülse 55, wie Figur 8 zeigt. Die Hülse 55 hat einen hexagonalen Anschlagflansch 56 und zwei Enden 57 und 58, die vom Flansch 56 abstehen und mit Außengewinde versehen sind. Ferner hat die Hülse 55 eine mit Innengewinde versehene Bohrung 59, die eine Durchgangsbohrung sein kann. Die Mutter 52, die einen Fuß bildet, ist auf ein Ende der Hülse 55 aufgeschraubt und das andere Ende der Hülse ist in einem Gewindeloch 6o des Fußmontiergliedes 37 eingeschraubt. Das Gewindeloch 6o ist axial mit der vertikalen Achse 5o ausgerichtet, die durch den Lasteinleitungspunkt geht. Durch Drehen der Mutter 52 ist jeder Fuß auf und ab vertikal einstellbar und zwar in Ausrichtung mit dem betreffenden Lasteinleitungspunkt, um die Waage zu nivellieren.

Ein als Madenschraube 61 ausgebildeter Überlastanschlag ist einstellbar in dem Gewindeloch 59 der Hülse 55 vorgesehen, wobei der Anschlag ebenfalls in vertikaler Ausrichtung mit dem betreffenden Lasteinleitungspunkt angeordnet ist, um/ mit dem freien Ende des Lastübertragungsarmes 51 bzw. mit einer Schraube zusammenzuarbeiten, die durch das freie Ende des Armes 51 hindurchgeht und eine Kugelpfanne für die Kugel am Arm 51 befestigt. Ein Loch 62 durch den betreffenden Meßwandlerbalken 36a, 36b sorgt dafür, daß die Anschlagschraube 61 frei durch das Loch 62 passieren kann, wenn der Meßwandlerbalken 36a, 36b übermäßig auslenkt.

Die Waage ist mit einer Bodenabdeckung 63 versehen, die einen nach oben gerichteten Rand oder Spritzschutz 64 hat. Je nach der Belastbarkeit der Waage kann die Bodenabdeckung 63 stark genug ausgebildet sein, um als Fußmontierglied 37 zu dienen, wobei ein separates Element zur Montierung der Füße unnötig wird.

Wie die Figuren 6a und 6b zeigen, enthalten die Querverbindungsmittel mindestens einen Querbalken oder Querstab 32, der die Meßwandlereinheiten 3o und 31 im wesentlichen steif miteinander verbindet. Die Figuren 7a und 7b zeigen eine Abwandlung, in der die Meßwandlereinheiten 3o' und 31' steif oder im wesentlichen steif durch zwei Querverbindungsglieder 65 miteinander verbunden sind, wobei diese Verbindungsglieder an ihren Enden gleichzeitig als Abstandhalter 66 zwischen dem Meßwandlerstab 36 und dem Fußmontier-

glied 37 wirken. Vorzugsweise ist der Abstandhalter 39 in den Figuren 6a und 6b lang genug, um gleichzeitig als Querverbindungsglied zu wirken, wobei das Glied 32 überflüssig wird. Damit können der Abstandshalter und der Querverbinder eine einstückige, integrale Einheit bilden, oder das Fußmontierglied und der Querverbinder können eine integrale, einstückige Einheit bilden. Diese Gesichtspunkte gelten auch für die Ausführungsform gemäß Figur 1o, in der der Meßwandlerstab 67 durch Abstandshalter 69 von den Fußmontierelementen 68 auf Abstand gehalten wird. Die Abstandhalter 69 können gleichzeitig die Querverbindungsstäbe bilden, wie in Figur 7a mit Bezugszeichen 65 gezeigt ist. In der alternativen Ausführung können die Fußmontierglieder gleichzeitig die Querverbindungsglieder bilden, wobei die Draufsicht dann wie    eine C-Form aussieht.

Figur 9 zeigt einen Meßwandlerstab 7o mit einem Mittelabschnitt 72, der von einem Abstandhalter 72 abgestützt ist, um auskragende Meßwandlerbalken 73 und 74 zu bilden, die mit Dehnungsmeßfühlern 75 und 76 versehen sind. Lochpaare 77 und 78 gehen durch jeden Meßwandlerbalken, wie gezeigt. Die Löcher, die ein Paar bilden, wie zum Beispiel die Löcher 77, sind auf Abstand voneinander angeordnet, so daß die betreffenden Dehnungsmeßstreifen zwischen den Löchern, die ein Paar bilden, angeordnet sind. Ferner sind die Paare voneinander auf Abstand angeordnet und zwar in der Längsrichtung des Meßwandlerstabes 7o ebenfalls wie dargestellt. Die Löcher 79 gehen zentral durch den betreffenden Meßwandlerbalken, damit die Anschlagschraube 61, die in den Figuren 5a und 5b gezeigt ist, frei durch diese Löcher 79 passieren kann. Weitere Löcher 8o sind zur Befestigung des Lastübertragungsarmes 51 vorgesehen, wie das in Figur 5a und 5b gezeigt ist.

Die Löcher 77, 78 haben unter anderem den Vorteil, daß die Durchbiegung der betreffenden Meßwandlerbalken 73, 74 auf ein Minimum reduziert wird, wenn eine Last wirksam ist.

Diese Reduzierung der Durchbiegung des Meßwandlerbalkens ist aus mehreren Gründen wichtig. So ist es besonders wichtig, daß damit auch die Bewegung der Kugel 15 in ihrer Kugelpfanne 16 auf ein Minimum gehalten wird, wobei sich eine verbesserte Linearität, eine verbesserte Hysteresis und eine verbesserte Wiederholbarkeit ergeben. Durch die Anordnung der Löcher 77, 78 mit etwas Abstand von den benachbarten langen Seitenwänden des Meßwandlerstabes 7o ergibt sich eine Torsionssteifheit des Meßwandlerbalkens, die tatsächlich und wünschenswert größer ist, als die Torsionssteifheit eines entsprechenden Meßwandlerbalkens, in dem die Querschnittsdimension durch Ausschnitte reduziert worden ist, die von der Seitenwand ausgehend nach innen reichen. Ein weiterer Vorteil der Löcher 77, 78 ist darin zu sehen, daß damit die Biegebelastung am Übergang zwischen dem Meßwandlerbalkenteil und dem unterstützten Teil des Meßwandlerstabes reduziert wird. Ferner sind alle Belastungsreflektionen vom unterstützten Teil des Meßwandlerstabes in den Meßwandlerbalken ebenfalls geringer, weil die wirksame Breite an der Stelle reduziert ist, wo die Dehnungsmeßstreifen 75, 76 angeordnet sind. Sämtliche Löcher 77, 78, 79 und 8o können durch Stanzen hergestellt werden, so daß ein Bohren der Löcher vermieden wird, wodurch die Fertigungskosten weiter verringert werden.

Ein wichtiger Vorteil der Erfindung ist darin zu sehen, daß die stabförmigen Meßwandlerelemente aus normiertem Stabmaterial hergestellt werden können, wobei fast keine maschinelle Bearbeitung notwendig wird, mit Ausnahme des Schneidens und mit Ausnahme der Bohrungen für die Schrauben 5 und 14, sowie für die Anschlagmadenschrauben 19 und 2o.

Weitere Vorteile der Erfindung bestehen darin, daß diese Waagenkonstruktionen ein sehr geringes Gewicht haben, da die notwendige Materialmenge wesentlich geringer ist, als bei herkömmlichen Waagen, in denen sowohl die Oberplatte als auch die Unterplatte eine Vollplatte ist. Die Materialreduktion ist insbesondere deshalb möglich, weil die Füße
in direkter vertikaler Ausrichtung mit dem Lasteinleitungspunkt angeordnet sind, so daß sich weder aus den
Lasteinleitungskräften noch aus den Reaktionskräften an den
Füßen Momente ergeben. Dies beruht auf der Tatsache, daß
diese Kräfte vertikal miteinander ausgerichtet sind, und
demgemäß keine Momente ergeben können. Da keine Momente
vorhanden sind, und dementsprechend keine Biegebelastung
in den Querverbindungsgliedern auftritt, können die Querverbindungsglieder sehr leicht konstruiert werden.

Dieser Vorteil wird dadurch noch verbessert, daß die Einstellbarkeit der Füße und der Überlastschutz miteinander
kombiniert werden, und zwar so, daß beide in axialer Ausrichtung mit dem Lasteinleitungspunkt liegen. Damit wird
eine Überlast direkt auf die Füße und die Stützfläche
ohne die Bildung von Momenten übertragen.

Die genannte Materialreduzierung resultiert in preiswerten
Waagen, die trotzdem für den beabsichtigten Zweck sehr genau
sind. Durch das Vermeiden von Bearbeitungsvorgängen und
damit auch der Bearbeitungstoleranzen, werden die Kosten
sogar weiter reduziert. Z.B., können bei Waagen für
kleinere Lastbereiche die oben genannten Löcher gestanzt
statt gebohrt werden. In solchen Waagen können Stäbe mit den
Dimensionen 3,17 x 12,7 mm benutzt werden. In Waagen für
größere Lastbereiche mit größeren Meßwandlerstäben ist es
eventuell vorzuziehen, daß die Löcher gebohrt werden.

Ein weiterer Vorteil der Erfindung ist darin zu sehen, daß
durch richtige Auswahl des Abstandes zwischen den Dehnungsmeßfühlerelementen voneinander in der Längsrichtung des
Meßwandlerstabes die Lastgrenze derselben Waage variiert
werden kann. Damit kann eine Waage der gleichen Größe
entweder für den Bereich bis etwa 455 kg oder für den Bereich bis etwa 682 kg kalibriert werden, einfach durch geeignete Wahl des Abstandes zwischen den Meßfühlern. Durch Vermeidung von Belastungen, insbesondere Biegebelastungen, in den Waagenkomponenten außer den Meßwandlerbalen, ist es möglich geworden, die Belastungsgrenze einer Waage zwischen 5o und 1oo% zu variieren. Anders ausgedrückt, die Belastungsgrenze einer Waage, die für eine mittlere Last ausgelegt ist, kann zwischen 1/2 und dem Doppelten der mittleren Last geändert werden. Dieser Vorteil ist mit keiner der herkömmlichen Waagen zu erzielen.

Obwohl die Erfindung mit Bezug auf bestimmte Ausführungsbeispiele beschrieben wurde, ist zu verstehen, daß es beabsichtigt ist, alle Änderungen und Äquivalente innerhalb des Schutzumfanges der beigefügten Ansprüche zu erfassen.

Patentansprüche:

1. Plattformartige Waage, gekennzeichnet durch einen Boden (1), zwei Meßwandlerstäbe (3) und Distanzmittel (2), die zwischen dem Boden und jedem der genannten Meßwandlerstäbe derart angeordnet sind, daß beide Enden jedes Stabes auskragen, wobei jeder Stab zwei entsprechende balkenartige Meßwandlerbalken (6) bildet, Dehnungsmeßfühlermittel (7, 8) an den Meßwandlerbalken befestigt sind, eine Platte (4) betriebsfähig über den zwei genannten Meßwandlerstäben angeordnet ist und Lastübertragungsmittel (11) zwischen der Platte und den Meßwandlerbalken vorgesehen sind, um eine Last, die auf die Platte einwirkt, mit den Dehnungsmeßfühlermitteln zu messen.

2. Waage nach Anspruch 1, dadurch gekennzeichnet, daß die Lastübertragungsmittel (11) jedes Meßwandlerbalkens (6) einen Arm (12) enthalten, der an dem jeweiligen Meßwandlerbalken befestigt ist, sowie Kugel- und Kugelpfannenmittel (15, 16) die zwischen dem Arm und der Platte (4) angeordnet sind, um eine Last durch die Kugel- und Kugelpfannenmittel in den jeweiligen Meßwandlerbalken einzuleiten.

3. Waage nach Anspruch 2, gekennzeichnet durch eine flexible Hülse (18), die die Kugelpfannenmittel (15, 16) umfaßt, um die Kugel (15) in der Kugelpfanne (16) zu halten und um Plattenschwingungen zu dämpfen.

4. Waage nach Anspruch 2, gekennzeichnet durch ein einstellbares Anschlagmittel (19), das zwischen dem Lastübertragungsarm (12) und dem jeweiligen Meßwandlerbalken (6) angeordnet ist.

5. Waage nach Anspruch 2, dadurch gekennzeichnet, daß jeder Meßwandlerbalken ein freies Ende besitzt und ein Distanzstück zwischen dem Lastübertragungsarm und dem freien Ende des jeweiligen Meßwandlerbalkens angeordnet ist, wobei der Lastübertragungsarm ebenfalls ein freies Ende besitzt, das in die entgegengesetzte Richtung zeigt, im Vergleich zur Richtung, in die das freie Ende des jeweiligen Meßwandlerbalkens ragt.

6. Waage nach Anspruch 4, gekennzeichnet durch ein zweites einstellbares Anschlagmittel (2o) das zwischen dem Boden (1) und dem jeweiligen Meßwandlerbalken (6) angeordnet ist.

7. Waage nach Anspruch 1, dadurch gekennzeichnet, daß der Boden Füße (21) hat, um die Waage auf einer Stützfläche abzustützen.

8. Waage nach Anspruch 7, dadurch gekennzeichnet, daß ein einstellbares Anschlagmittel (27) vorgesehen ist, das axial und vertikal über dem jeweiligen Fuß (28) angeordnet ist.

9. Waage nach Anspruch 2, dadurch gekennzeichnet, daß der Boden Füße (21) hat, die vertikal und axial unter der Kugel (15) und dem Kugelpfannenmittel in einer Linie angeordnet sind.

1o. Waage nach Anspruch 1, dadurch gekennzeichnet, daß das Distanzmittel zwei Abstandshalter (39) besitzt, die kürzer sind als die Meßwandlerstäbe (36) und zwischen dem Boden und dem jeweiligen Meßwandlerstab eingefügt sind.

11. Waage nach Anspruch 1, dadurch gekennzeichnet, daß der Boden eine rechteckige oder quadratische Platte ist, und daß die zwei Meßwandlerstäbe (3) parallel zueinander und parallel zu zwei parallelen Kanten der Bodenplatte angeordnet sind.

12. Waage nach Anspruch 1, dadurch gekennzeichnet, daß Ansatzschrauben (9) vorgesehen sind, die fest mit der Platte (4) verbunden sind und durch den Boden (1) mit einem bestimmten Spiel gehen, um alle horizontalen Relativbewegungen auf das Spiel zwischen dem Boden und der Platte zu begrenzen, und um damit irgendwelchen unerwünschten Seitenbelastungen entgegenzuwirken.

13. Waage nach Anspruch 1, dadurch gekennzeichnet, daß in jedem Meßwandlerbalken (73, 74) zwei Durchgangslochpaare (77, 78) vorgesehen sind, um die Querschnittsfläche des Meßwandlerbalkens zu verringern, wo die Dehnungsmeßfühler oder Streifen zwischen zwei Löchern angeordnet sind, die ein Lochpaar bilden.

14. Plattformartige Waage, gekennzeichnet durch erste und zweite Meßwandlereinheiten (3o, 31), deren jede einen länglichen Meßwandlerstab (36), zwei Füße (38) und Fußmontiermittel (37) sowie Abstandshalter (39) zwischen den Fußmontiermitteln und dem Meßwandlerstab aufweist, derart, daß beide Enden des Meßwandlerstabes auskragen, um damit an jedem Ende des Meßwandlerstabes einen Meßwandlerbalken (36a, 36b) zu bilden, jede Meßwandlereinheit ferner Dehnungsmeßfühler (42) enthält, die an den auskragenden Stabenden befestigt sind, daß Querverbindungsmittel (32) vorgesehen sind, welche die beiden Meßwandlereinheiten im wesentlichen steif miteinander verbinden, eine Platte (44) über den Meßwandlereinheiten angeordnet ist, Lastübertragungsmittel (48) wirksam zwischen der Platte und den Meßwandlerbalken angeordnet sind, um mit Hilfe der Dehnungsmeßfühler eine Last zu messen, die auf die Platte wirkt, daß die Lastübertragungsmittel über jedem Meßwandlerbalken einen Lasteinleitungspunkt definieren, und daß jeder Fuß eine
vertikale Achse hat, die durch den zugehörigen Lasteinleitungspunkt führt.


15. Waage nach Anspruch 14, gekennzeichnet durch Mittel (52)
zur einstellbaren Befestigung der Füße an dem betreffenden Fußmontiermittel, um jeden Fuß individuell auf
oder ab einstellen zu können, und zwar in vertikaler
Ausrichtung mit dem zugehörigen Lasteinleitungspunkt.


16. Waage nach Anspruch 14, dadurch gekennzeichnet, daß
die einstellbaren Fußbefestigungsmittel eine Hülse (55)
mit einem Flansch (56) besitzen, die an jeder Seite des
Flansches ein Ende mit Außengewinde sowie ein Gewindedurchgangsloch (59) durch die Länge der Hülse besitzt,
wobei jeder Fuß mit einer Mutter (52) mit Flansch (53)
auf einem Hülsenende und, die Fußmontiermittel mit
einem Gewindeloch (6o) versehen sind, das axial und
vertikal mit dem Lasteinleitungspunkt ausgerichtet ist,
und das andere Hülsenende im Gewindeloch der Fußmontiermittel eingeschraubt ist.


17. Waage nach Anspruch 14, dadurch gekennzeichnet, daß
Überlastanschlagmittel (61) vorgesehen sind, die vertikal mit dem zugehörigen Lasteinleitungspunkt ausgerichtet sind.


18. Waage nach Anspruch 17, dadurch gekennzeichnet, daß
die Füße mit einer Hülse (55) mit einem Innengewinde
versehen sind, das axial und vertikal mit dem Lasteinleitungspunkt ausgerichtet ist, und daß die Überlastanschlagmittel eine Madenschraube (61) in diesem Innengewinde besitzen, die ebenfalls in vertikaler Ausrichtung mit dem Lasteinleitungspunkt angeordnet ist.


19. Waage nach Anspruch 14, dadurch gekennzeichnet, daß

0116170

die Fußmontiermittel (37) einen Unterboden (63) für die Waage aufweisen.

2o. Waage nach Anspruch 14, dadurch gekennzeichnet, daß die Querverbindungsmittel mindestens einen Querbalken oder Querstab (32) enthalten, der die beiden Meßwandlereinheiten (3o, 31) steif miteinander verbindet.

21. Waage nach Anspruch 14, dadurch gekennzeichnet, daß die Querverbindungsmittel (65) und die Abstandshalter (66) als einstückige (integrale) Komponente ausgebildet sind.

22. Waage nach Anspruch 14, dadurch gekennzeichnet, daß die Fußmontiermittel und die Querverbindungsmittel als einstückige (integrale) Komponente ausgebildet sind.

23. Waage nach Anspruch 14, dadurch gekennzeichnet, daß der Meßwandlerbalken zwei Durchgangslochpaare (77, 78) aufweist, um die Querschnittsfläche des Meßwandlerbalkens dort zu reduzieren, wo die Dehnungsmeßstreifen zwischen zwei Löchern, die ein Lochpaar bilden, angeordnet sind.

FIG. 1

FIG. 2

2/5

0116170

FIG. 3

FIG. 4

FIG. 5a

FIG. 5b

0116170

FIG. 6a

FIG. 6b

FIG. 7a

FIG. 7b

FIG. 8

FIG. 9

FIG. 10